# EUROPEAN PATENT APPLICATION

(11) **EP 4 806 533 A1**
(43) Date of publication of application: **16.09.2026**
(21) Application number: 24893636.1
(22) Date of filing: 25.11.2024
(51) Int. Cl.: B01D 35/143, F03B 13/00, C02F 1/00

(54) **WATER PURIFIER**

(30) Priority: 24.11.2023 CN 202323187170 U; 24.11.2023 CN 202311583667
(71) Applicant: Zhu, Junfeng, Zhumadian, Henan 463000 (CN)
(72) Inventor: Zhu, Junfeng, Zhumadian, Henan 463000 (CN)
(74) Representative: Lin Chien, Mon-Yin
(86) International application number: PCT/CN2024/134314
(87) International publication number: WO 2025/108488

(57) **Abstract**

The present invention provides a water purifier. The water purifier includes a water purification assembly, a power generation assembly, and a digital display assembly. The water purification assembly is provided with a filter cartridge. The filter cartridge is arranged in a water channel, and the filter cartridge is configured for filtering raw water to provide filtered water. The power generation assembly includes a generator arranged in the water channel. The generator is configured for generating electric energy by action of water in the water channel. The digital display assembly includes a control unit and a display unit. The control unit is configured for acquiring initial electric energy of the generator and real-time electric energy of the generator, and for calculating clogging service life of the filter cartridge according to the initial electric energy and the real-time electric energy; and/or the control unit is configured for acquiring a sum of power generation duration of the generator, and for calculating time-based service life of the filter cartridge according to the sum of power generation duration. The display unit is configured for displaying the clogging service life of the filter cartridge and/or the time-based service life of the filter cartridge.

## Description

### TECHNICAL FIELD

The present invention relates to the technical field of water purification, and in particular to a water purifier.

### BACKGROUND

Nowadays, water sources are subject to significant pollution due to industrial and technological development. In addition, modern people have become more health-conscious and have higher demands on water quality, leading to the emergence of a large number of water purifiers on the market. A typical water purifier can filter common pollutants, chlorine, impurities, etc., through different water purification methods. Current water purification methods mainly include reverse osmosis (RO) treatment, activated carbon filtration method, water softener softening method, and distillation method.

The necessity of environmental protection lies in safeguarding the future survival and development of humanity. With global population growth and economic development, energy consumption is continuously increasing, thereby placing growing pressure on limited energy resources. Meanwhile, conventional energy utilization methods are causing increasingly severe environmental impacts, including air pollution, the greenhouse effect, water resource scarcity, and other related issues. Therefore, measures must be taken to ensure the sustainable utilization of energy while reducing its impact on the environment. However, even water purifiers currently on the market that are provided with a data display function require an external power supply, and thus perform inadequately in terms of environmental protection. Therefore, there is a need for a digital display water purification faucet with a built-in water purification function, and this water purification faucet is capable of displaying data and is powered by a new energy source utilizing water flow.

Most current water purifiers do not have a display function and thus cannot display information such as water temperature. Therefore, there is a need for a digital display faucet that has a built-in water purification function and is capable of displaying data. Additionally, during the use of a water purification faucet, users often neglect the service life of the filter cartridge. However, failure to replace the filter cartridge in a timely manner may reduce the purification effect and adversely affect user health.

### SUMMARY

In order to address the problems existing in the prior art, the present invention provides a water purifier.

The water purifier includes a water purification assembly, and a filter cartridge is arranged in the water purification assembly. The filter cartridge is arranged in a water channel, and the filter cartridge is configured for filtering raw water to provide filtered water.

The water purifier further includes a power generation assembly, and the power generation assembly includes a generator arranged in the water channel. The generator is configured for generating electric energy by action of water in the water channel.

The water purifier further includes a digital display assembly. The digital display assembly includes a control unit. The control unit is configured for acquiring initial electric energy of the generator and real-time electric energy of the generator, and for calculating clogging service life of the filter cartridge according to the initial electric energy and the real-time electric energy; and/or the control unit is configured for acquiring a sum of power generation duration of the generator, and for calculating time-based service life of the filter cartridge according to the sum of power generation duration. The initial electric energy is initial electric energy generated by the generator, and the initial electric energy is detected when water flows through the water purifier after the filter cartridge of the water purifier is replaced. The real-time electric energy is real-time electric energy generated by the generator, and the real-time electric energy is detected during use of the water purifier after the filter cartridge of the water purifier is replaced. The digital display assembly further includes a display unit, and the display unit is configured for displaying the clogging service life of the filter cartridge and/or time-based service life of the filter cartridge.

For the water purifier provided by the present application, a display unit is provided to display the clogging service life and/or the time-based service life of the filter cartridge, thereby prompting the user to replace the filter cartridge in a timely manner. Furthermore, when both the clogging service life and the time-based service life are calculated, the display unit can be controlled to display the lower value of the clogging service life and the time-based service life, and to simultaneously display or alternately display the clogging service life and the time-based service life. Therefore, the user is reminded not based on only one parameter, but rather by taking into account both the degree of blockage of the filter cartridge and the operating duration of the filter cartridge, thereby achieving a more accurate filter cartridge replacement reminder and providing an improved user experience. Furthermore, the degree of blockage of the filter cartridge is calculated based on the initial electric energy and the real-time electric energy. The initial electric energy may be obtained based on factors such as the water pressure of a connected faucet, thereby providing a more accurate reference basis. Compared with a method in which a preset initial electric energy value is provided by the system itself, the aforementioned approach allows for more accurate calculation of the degree of blockage of the filter cartridge.

Furthermore, the water purifier is powered by the generator, which eliminates the need for an external power supply. The generator is driven by water flow in the water channel to generate electricity, thereby enabling resource recovery and producing new energy. In addition, due to the presence of the generator, as water flows through the generator to drive the generator to produce electric energy, one portion of the mechanical energy of the water flow is converted into electric energy, thereby reducing the flow velocity of the water. As a result, less water flows out within the same period of time, which can reduce water waste to a certain extent and achieve resource conservation.

### BRIEF DESCRIPTION OF THE DRAWINGS

In the drawings, unless otherwise specified, the same reference numerals throughout the multiple drawings denote the same or similar components or elements. The drawings are not necessarily drawn to scale. It should be understood that the drawings merely illustrate some embodiments according to the disclosure of the present application and should not be considered as limiting the scope of the present application.
FIG. 1 is a perspective view of a water purifier of the first embodiment of the present invention;
FIG. 2 is a perspective view of the water purifier shown in FIG. 1 from another angle;
FIG. 3 is an exploded view of the water purifier shown in FIG. 1;
FIG. 4 is an exploded view of the water purifier shown in FIG. 1 from another angle;
FIG. 5 is a sectional view of the water purifier shown in FIG. 1;
FIG. 6 is an enlarged view of area A in FIG. 3;
FIG. 7 is an enlarged view of area B in FIG. 3;
FIG. 8 is an enlarged view of area C in FIG. 4;
FIG. 9 is a structural schematic view of a switching valve of the water purifier shown in FIG. 1;
FIG. 10 is a perspective view showing a main body portion of a filter housing of the water purifier shown in FIG. 3;
FIG. 11 is a perspective view of the main body portion of the filter housing shown in FIG. 10 from another angle;
FIG. 12 is a perspective view showing a water inlet portion of the filter housing of the water purifier shown in FIG. 3;
FIG. 13 is a perspective view of the water inlet portion of the filter housing shown in FIG. 12 from another angle;
FIG. 14 is an exploded view of a power generation assembly of the water purifier shown in FIG. 3;
FIG. 15 is an assembled sectional view of the power generation assembly of the water purifier shown in FIG. 3;
FIG. 16 is a circuit block diagram of the water purifier shown in FIG. 1;
FIG. 17 is a circuit block diagram of a modified embodiment of the water purifier shown in FIG. 16;
FIG. 18 is a schematic diagram of a specific circuit structure of the water purifier shown in FIG. 16;
FIG. 19 is a schematic diagram of a display interface of a digital display assembly of the water purifier shown in FIG. 1;
FIG. 20 is a schematic diagram of a display interface of a modified embodiment shown in FIG. 19;
FIG. 21 is a structural schematic view of a data display system inside a control unit of the water purifier shown in FIG. 3;
FIG. 22 is a schematic flow diagram of a data display method of the water purifier shown in FIG. 21;
FIG. 23 is a schematic diagram of a sub-flow of step S1 of FIG. 22;
FIG. 24 is a schematic diagram of a sub-flow of step S2 of FIG. 22;
FIG. 25 is a perspective view of a water purifier of the second embodiment of the present invention;
FIG. 26 is a perspective view of the water purifier shown in FIG. 25 from another angle;
FIG. 27 is an exploded view of the water purifier shown in FIG. 25;
FIG. 28 is a perspective view of a water purifier of the third embodiment of the present invention;
FIG. 29 is a perspective view of the water purifier shown in FIG. 28 from another angle;
FIG. 30 is an exploded view of the water purifier shown in FIG. 28.

### DETAILED DESCRIPTION OF THE EMBODIMENTS

The present invention will be described in detail below with reference to the accompanying drawings and specific embodiments. The present invention is not limited to these embodiments, and other embodiments may also fall within the scope of the present invention as long as they conform to the gist of the present invention.

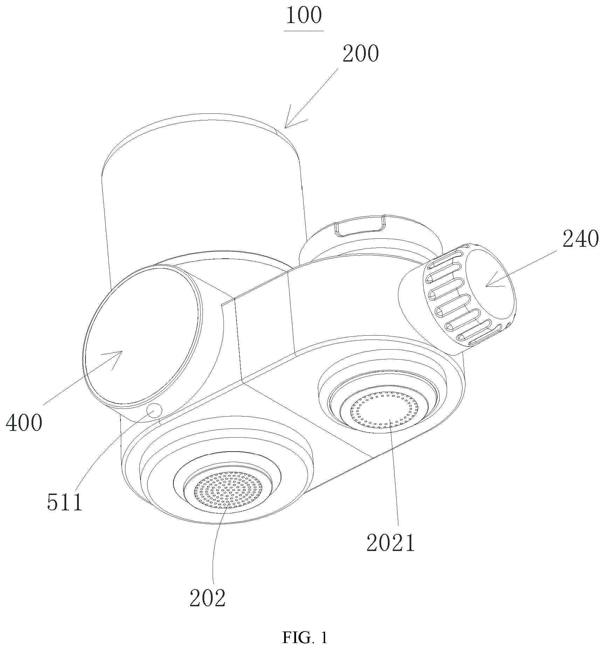

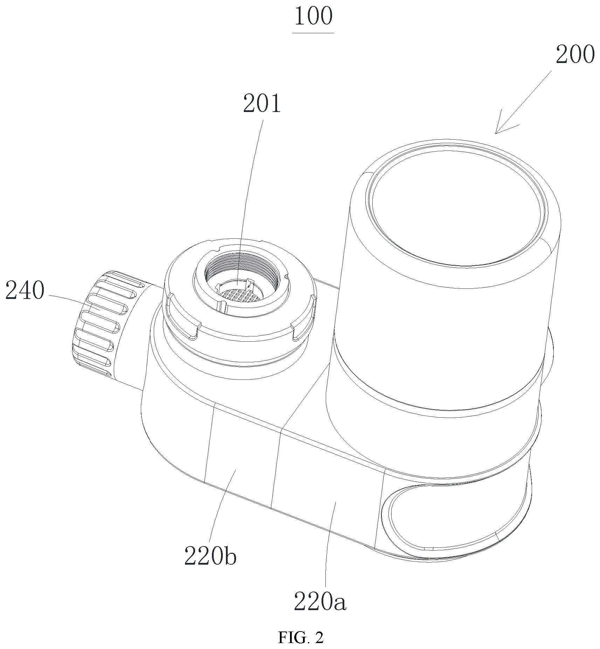

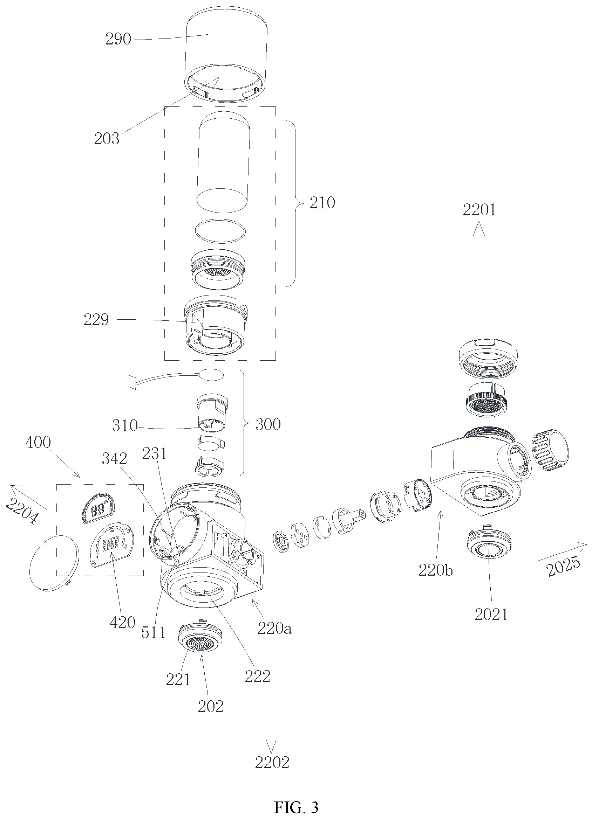

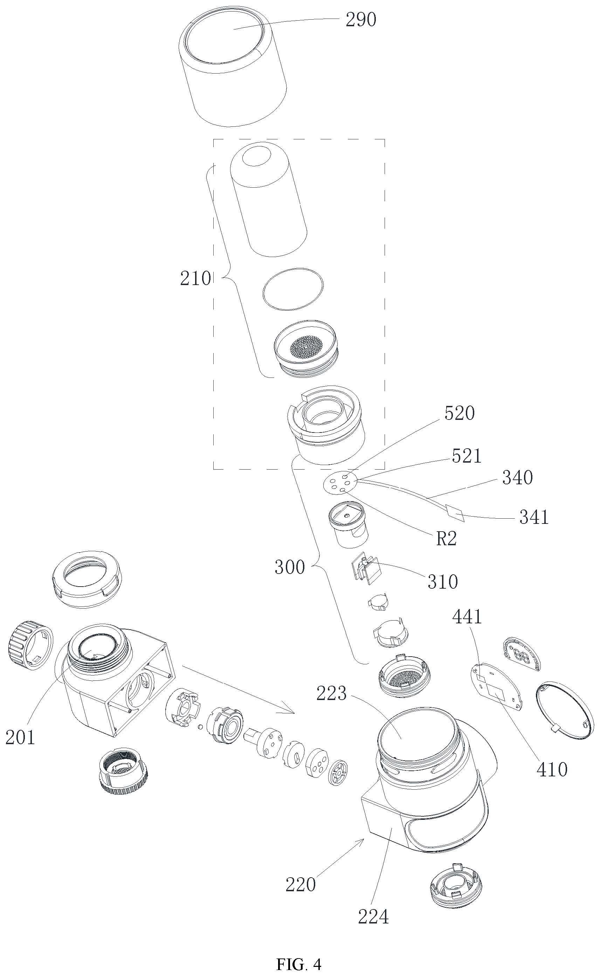

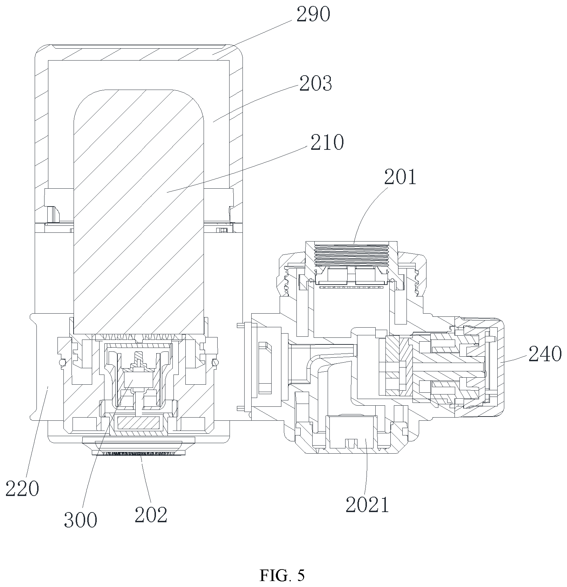

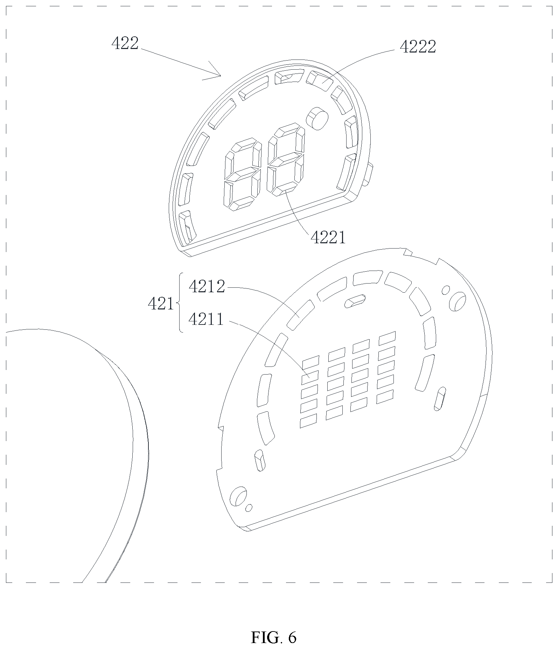

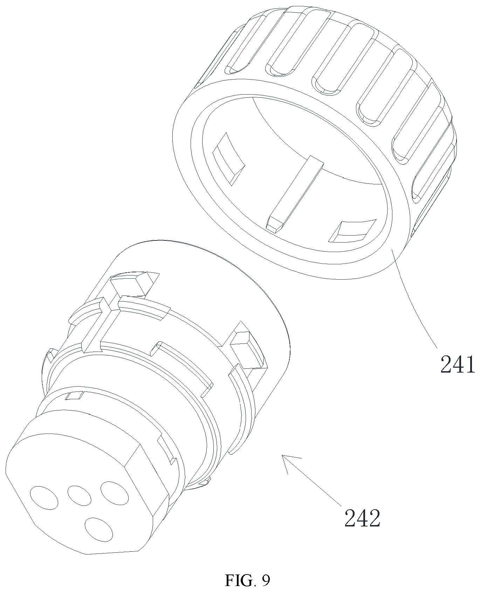

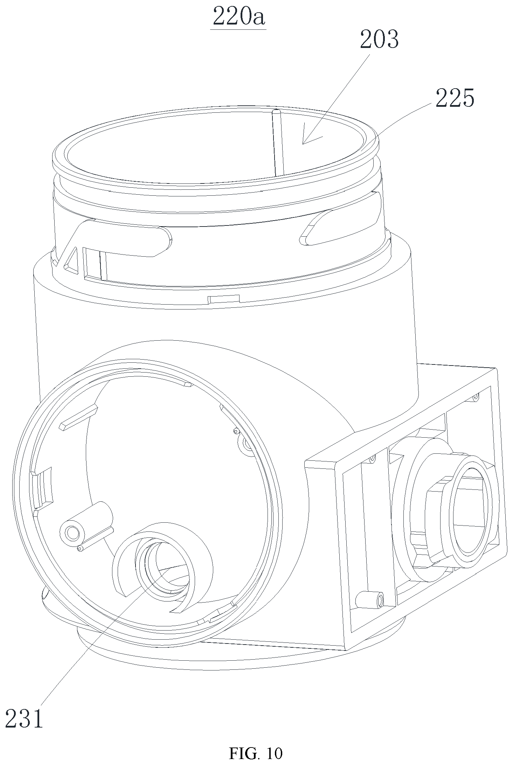

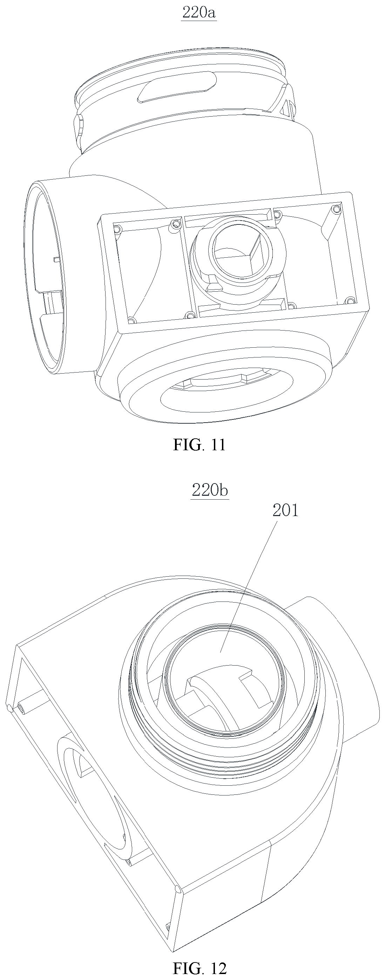

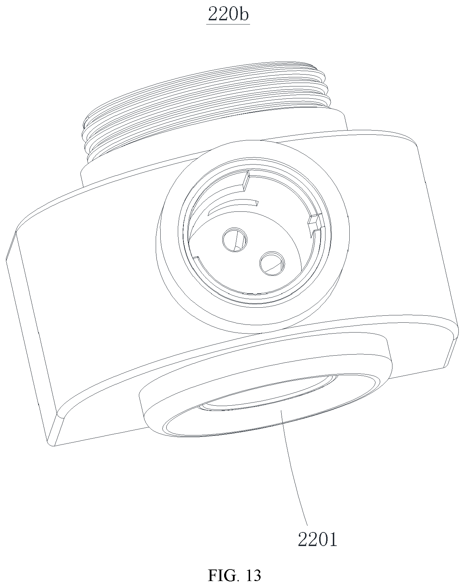

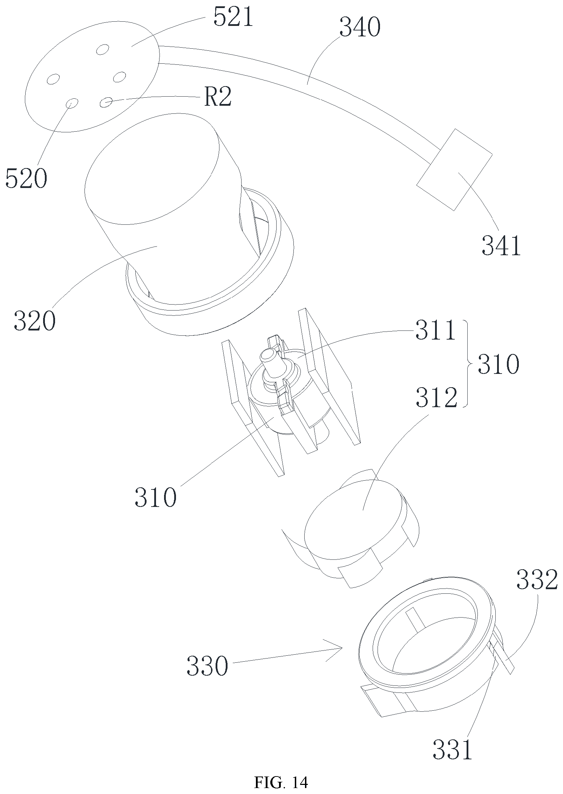

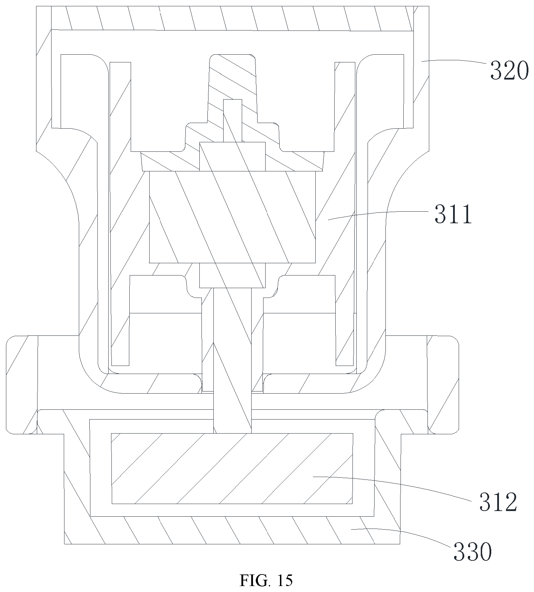

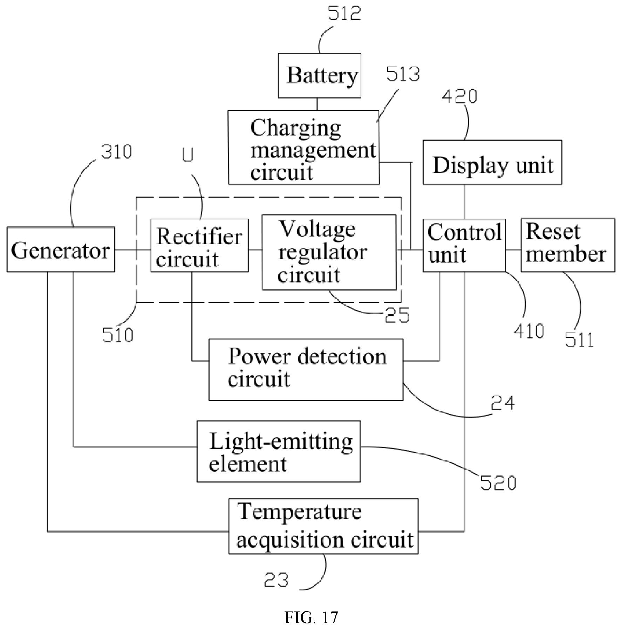

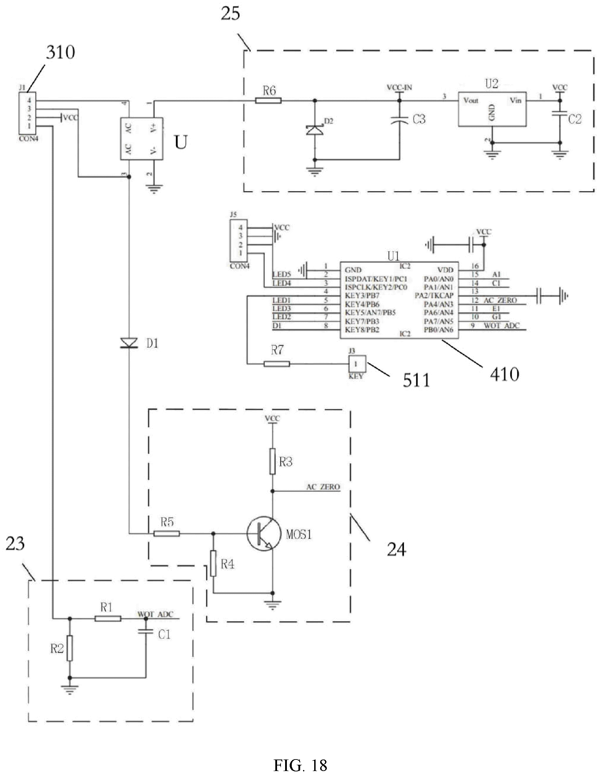

Referring to FIG. 1 - FIG. 20, the first embodiment of the present application provides a water purifier 100. The water purifier 100 is connected to a faucet to receive raw water and to provide filtered water. The water purifier 100 includes a water purification assembly 200, a power generation assembly 300, and a digital display assembly 400.

A filter cartridge 210 is arranged in the water purification assembly 200. The filter cartridge 210 is arranged in a water channel, and the filter cartridge 210 is configured for filtering raw water to provide filtered water.

The power generation assembly 300 includes a generator 310 arranged in the water channel. The generator 310 is configured for generating electric energy by action of water in the water channel.

The digital display assembly 400 is configured for displaying an operating status of the water purifier 100. The operating status includes, but is not limited to, at least one of a clogging service life of the filter cartridge 210, a time-based service life of the filter cartridge 210, real-time water temperature, a rotational speed of a generator, a power level of a built-in battery, and the like.

The digital display assembly 400 includes a control unit 410 and a display unit 420.

The control unit 410 is configured for acquiring initial electric energy of the generator 310 and real-time electric energy of the generator 310, and for calculating clogging service life of the filter cartridge 210 according to the initial electric energy and the real-time electric energy, and/or the control unit 410 is configured for acquiring a sum of power generation duration of the generator 310, and for calculating time-based service life of the filter cartridge 210 according to the sum of power generation duration. The initial electric energy is initial electric energy generated by the generator 310, and the initial electric energy is detected when water flows through the water purifier 100 after the filter cartridge 210 of the water purifier 100 is replaced. The real-time electric energy is real-time electric energy generated by the generator 310, and the real-time electric energy is detected during use of the water purifier after the filter cartridge 210 of the water purifier 100 is replaced.

The display unit 420 is configured for displaying the clogging service life of the filter cartridge 210 and/or the time-based service life of the filter cartridge 210.

For the water purifier 100 provided by the present application, the display unit 420 is provided to display the clogging service life and/or the time-based service life of the filter cartridge 210, thereby prompting the user to replace the filter cartridge 210 in a timely manner. Furthermore, when both the clogging service life and the time-based service life are calculated, the display unit 420 can be controlled to display the lower value of the clogging service life and the time-based service life, and to display the clogging service life and the time-based service life simultaneously or alternately. Therefore, the user is reminded not based on only one parameter, but rather by taking into account both the degree of blockage of the filter cartridge and the operating duration of the filter cartridge to remind the user, thereby achieving a more accurate filter cartridge replacement reminder and providing an improved user experience.

Furthermore, the degree of blockage of the filter cartridge is calculated based on the initial electric energy and the real-time electric energy. The initial electric energy may be obtained based on factors such as the water pressure of a connected faucet, thereby providing a more accurate reference basis. Compared with a method in which a preset initial electric energy value is provided by the system itself, the aforementioned approach allows for more accurate calculation of the degree of blockage of the filter cartridge. It can be understood that, after the filter cartridge is replaced, the initial electric energy may be the electric energy that is obtained for the first time by the control unit 410 from the generator 310 when the user turns the faucet connected to the water purifier 100 to its maximum flow.

In addition, in the first embodiment of the present application, the water purifier is powered by the generator 310, which eliminates the need for an external power supply. The generator 310 is driven by water flow in the water channel to generate electricity, thereby enabling resource recovery and producing new energy. Furthermore, due to the presence of the generator 310, as water flows through the generator 310 to drive the generator 310 to produce electric energy, one portion of the mechanical energy of the water flow is converted into electric energy, thereby reducing the flow velocity of the water. As a result, less water flows out within the same period of time, which can reduce water waste to a certain extent and achieve resource conservation.

The digital display assembly 400 is further configured for electrically connecting to the generator 310, so that the digital display assembly 400 is configured to operate under driving of the electric energy. The water purifier 100 further includes a voltage conversion circuit 510, and the voltage conversion circuit 510 is electrically connected between the generator 310 and the control unit 410. The voltage conversion circuit 510 is configured for receiving the electric energy and converting the electric energy into an operating voltage, and the control unit 410 is configured for receiving the operating voltage to operate. The voltage conversion circuit 510 includes a rectifier circuit U and a voltage regulator circuit 25. The rectifier circuit U is electrically connected between the generator 310 and the voltage regulator circuit 25, and the voltage regulator circuit 25 is further electrically connected to the control unit 410. It can be understood that the voltage conversion circuit 510 can convert the electric energy generated by the generator 310 into a voltage required for the operation of the control unit 410 and the like. Specifically, the generator 310 generates alternating current. Therefore, the voltage conversion circuit 510 may include the rectifier circuit U and the voltage regulator circuit 25.

Further, the water purifier 100 further includes a power detection circuit 24, and the power detection circuit 24 is electrically connected between the voltage conversion circuit 510 and the control unit 410. The power detection circuit 24 is configured for receiving a voltage from the voltage conversion circuit 510, so as to detect and acquire the initial electric energy and the real-time electric energy, or to acquire the sum of the duration, and for providing the initial electric energy and the real-time electric energy or the sum of the duration to the control unit 410. The power detection circuit 24 is electrically connected to the rectifier circuit U to receive a rectified voltage output by the rectifier circuit U, and the power detection circuit 24 is configured to perform detection according to the rectified voltage.

Further, the initial electric energy is at least one first signal detected by the power detection circuit 24, when water flows through the water purifier 100 after the filter cartridge of the water purifier is replaced. The first signal includes at least one of a current generated by the generator 310, a real-time voltage, electric energy per unit time (i.e., electric quantity), a frequency of an alternating current, an electromotive force, or a rotational speed. The at least one first signal serves as the initial electric energy. The real-time electric energy is at least one second signal detected by the power detection circuit 24, when water flows through the water purifier during use of the water purifier after the filter cartridge of the water purifier is replaced. The second signal includes at least one of a current generated by the generator 310, a real-time voltage, electric energy per unit time (i.e., electric quantity), a frequency of an alternating current, an electromotive force, or a rotational speed. The at least one second signal serves as the real-time electric energy. In the present application, electric energy per unit time (i.e., electric quantity) is mainly taken as an example for illustration, but it is not limited thereto.

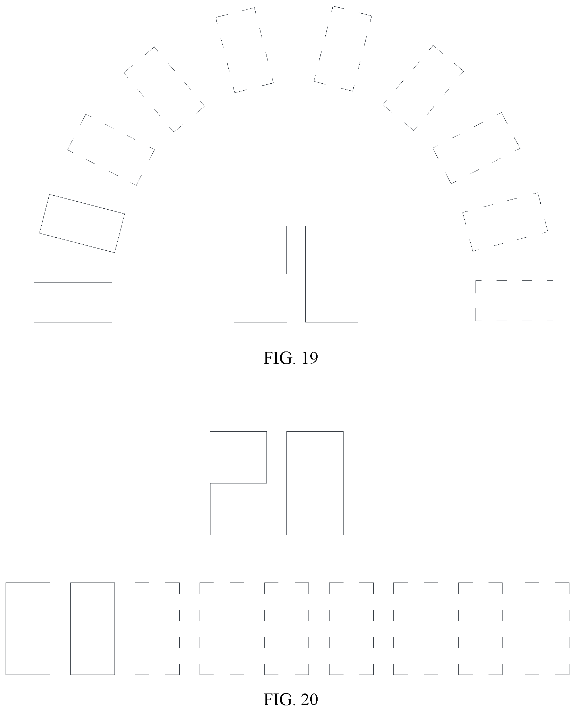

It can be understood that, in one embodiment, the control unit 410 is configured for calculating a ratio of the real-time electric energy to the initial electric energy, and a difference between one and the ratio is used as the clogging service life. Referring to FIG. 19 or FIG. 20, the display unit 420 is configured for displaying the clogging service life or the time-based service life in the form of an energy bar, a number from 0 to 100, or a percentage. The control unit 410 is further configured for calculating the time-based service life according to the sum of the duration and a preset usage duration threshold of the filter cartridge.

Further, the water purifier 100 includes a temperature acquisition circuit 23 arranged in the water channel, and the control unit 410 is electrically connected to the temperature acquisition circuit 23. The temperature acquisition circuit 23 is configured for acquiring a real-time water temperature of a water flow passing through the water purifier 100 to obtain a water temperature detection signal, and for smoothing the water temperature detection signal and providing the smoothed signal to the control unit 410. The control unit 410 is configured for controlling the display unit 410 to display the real-time water temperature according to the water temperature detection signal.

Further, the control unit 410 is configured for resetting, upon next replacement of the filter cartridge, the clogging service life and/or the time-based service life to initial values. The water purifier 100 is provided with a reset member 511, and the reset member 511 is electrically connected to the control unit 410. The reset member 511 is configured for a user to operate to generate a reset signal. The control unit 410 is configured for resetting, according to the reset signal, the clogging service life and/or the time-based service life to the initial values. It can be understood that, by arranging the reset member 511, the initial electric energy may be obtained based on factors such as the water pressure of a connected faucet, thereby providing a more accurate reference basis. Compared with a method in which a preset initial electric energy value is provided by the system itself, this aforementioned approach allows for more accurate calculation of the degree of blockage of the filter cartridge.

In a modified embodiment, the water purifier 100 further includes a battery 512 and a charging management circuit 513. The charging management circuit 513 is electrically connected between the voltage conversion circuit 510 and the battery 512. The charging management circuit 513 is configured for receiving voltage from the voltage conversion circuit 510 and for charging the battery 512. The battery 512 is further electrically connected to the control unit 410, and the battery 512 is configured for supplying power to the control unit 410 when the generator 310 cannot support the operation of the control unit 410.

Specifically, the display unit 420 may include a plurality of LED lamps 421 and a light-transmissive cover 422 arranged around the plurality of LED lamps 421. The control unit 410 is configured for controlling turning on and off of the plurality of LED lamps 421, so that the plurality of LED lamps 421 are capable of displaying, through the light-transmissive cover 422, the clogging service life of the filter cartridge 210 or the time-based service life of the filter cartridge 210. The display unit 420 further includes a decorative cover 423, and the decorative cover 423 is arranged on one side of the light-transmissive cover 422 away from the plurality of LED lamps 421. The digital display assembly 400 further includes a main circuit board 430. The control unit 410 and the plurality of LED lamps 421 are arranged on the main circuit board 430. The control unit 410 is located on a surface of the main circuit board 430 away from the plurality of LED lamps 421. The LED lamp 421 may include a plurality of first LED lamps 4211 corresponding to a temperature display area 4221, and a plurality of second LED lamps 4212 for displaying the clogging service life of the filter cartridge or the time-based service life of the filter cartridge.

The water purifier 100 further includes at least one light-emitting element 520. The at least one light-emitting element 520 is arranged at a position of the water channel adjacent to a water outlet 202. The at least one light-emitting element 520 is configured for emitting light towards water filtered by the filter cartridge 210, so as to create a decorative effect or to disinfect the water filtered by the filter cartridge 210. The at least one light-emitting element 520 is configured for emitting visible light and/or ultraviolet light. The at least one light-emitting element 520 is electrically connected to the generator 310 and is configured to operate by receiving the electric energy. The power generation assembly 300 further includes a generator housing 320, and the at least one light-emitting element 520 and the generator 310 are encapsulated together by the generator housing 320. The generator 310 includes a power generation body 311 and an impeller 312 connected to the power generation body 311. The impeller 312 is configured to rotate under action of water in the water channel to cause the power generation body 311 to generate the electric energy. The power generation assembly 300 further includes an impeller cover 330. The impeller cover 330 is arranged at one side of the impeller 312 away from the power generation body 311, and the impeller cover 330 is detachably connected to the generator housing 320. An outer side wall of the impeller cover 330 is provided with a plurality of impeller water inlets 331 and a plurality of water guiding vanes 332 arranged adjacent to the impeller water inlets 331. The temperature acquisition circuit 23 includes a sensing element R2. The sensing element R2, the at least one light-emitting element 520, and the generator 310 are all encapsulated together by the generator housing 320. The sensing element R2 and the at least one light-emitting element 520 are arranged on a circuit board 521. The circuit board 521 is located at one side of the power generation body 311 away from the impeller 312. In the present embodiment, a total number of the at least one light-emitting element 520 may be multiple, for example, four. The sensing element R2 may include a thermistor.

The water purification assembly 200 further includes a filter housing 220 and a filter housing cover 290. The filter housing 220 and the filter housing cover 290 are detachably connected and together define a receiving cavity 203 for receiving the filter cartridge 210. The filter housing 220 is provided with a water inlet 201 and a water outlet 202 each in communication with the receiving cavity 203. The water inlet 201, the receiving cavity 203, and the water outlet 202 are all positioned in the water channel, so that raw water entering the receiving cavity 203 through the water inlet 201 can be filtered by the filter cartridge 210, and the filtered water can flow out through the water outlet 202. The filter housing 220 is provided with a water outlet cover 221 and a power generation assembly mounting structure 222. The water outlet cover 221 is provided with the water outlet 202, and the water outlet 202 may include a plurality of water outlet holes 2021. The power generation assembly 300 is mounted on the power generation assembly mounting structure 222. The water outlet cover 221 and the power generation assembly mounting structure 222 are integrally formed or separately assembled. In the present embodiment, the water outlet cover 221 and the power generation assembly mounting structure 222 are mainly illustrated as being assembled as separate components. At least one portion of the water outlet cover 221 is made of light-transmissive material.

The filter housing 220 has an inner shell 223 and an outer shell 224, and the outer shell 224 is at least partially arranged around the inner shell 223. The outer shell 224 may include a metallic material, and the inner shell 223 may include a plastic material. The water outlet cover 221 and the power generation assembly mounting structure 222 are both arranged on the inner shell 223. The power generation assembly mounting structure 222 is provided with an inner shell portion 225 and a power generation chamber 226. The power generation chamber 225 is arranged on the inner shell portion 226, and the power generation assembly 300 is mounted in the power generation chamber 225. The power generation chamber 225 includes an inner annular wall 226, an outer annular wall 227, and a connecting wall 228 connected between the inner annular wall 226 and the outer annular wall 227. At least one of the inner annular wall 226 and the outer annular wall 227 is detachably connected to the filter cartridge 210. The power generation assembly 300 is arranged in the inner annular wall 226 and is arranged corresponding to a filter cartridge water outlet 2101. The inner annular wall 226 and the outer annular wall 227 are further provided with a wiring notch. An electrical connection wire 340 of the power generation assembly 300 extends out through the wiring notch, so as to be electrically connected to the digital display assembly 400. The inner shell 223 is provided with the water inlet 201 of the water channel, the water outlet 202 of the water channel, a water inlet channel 204 located between the water inlet 201 and the receiving cavity 203, and a water outlet channel 205 located between the receiving cavity 203 and the water outlet 202. The power generation assembly mounting structure 222 and the power generation assembly 300 are arranged corresponding to the water outlet channel 205.

The water inlet 201 faces a first side 2201 (e.g., an upper side) of the filter housing 220, and the water outlet 202 faces a second side 2202 of the filter housing 220. The first side 2201 and the second side 2202 are opposite sides. The water inlet 201 and the water outlet 202 are arranged opposite to each other or are arranged in a staggered manner. In the present embodiment, the water inlet 201 and the water outlet 202 are mainly illustrated as being arranged in a staggered manner as an example. A detachment direction of the filter housing cover 290 or a detachment direction of the filter cartridge 210 faces the first side 2201 or a third side 2203 adjacent to both the first side 2201 and the second side 2202. The filter housing 220 is further provided with a digital display assembly mounting cavity 230. The digital display assembly mounting cavity 230 is in communication with the wiring notch 229 through an opening 231 in a cavity wall, and the digital display assembly 400 is arranged in the digital display assembly mounting cavity 230. One end of the electrical connection wire 340 away from the generator 310 is provided with a first connector 341. The digital display assembly 400 is provided with a second connector 441, and the first connector 341 and the second connector 441 are engaged with each other. A waterproof sealing adhesive 342 surrounding an outer periphery of the electrical connection wire 340 is provided at the opening 231 of the cavity wall. The digital display assembly mounting cavity 230 is located at a fourth side 2204 of the filter housing 220, and the fourth side 2204 is adjacent to both the first side 2201 and the second side 2202. The fourth side 2204 may be different from the third side 2203.

The filter housing 220 further has a switching valve assembly 240, and the switching valve assembly 240 is arranged corresponding to the water inlet 201. The switching valve assembly 240 is configured to, under a user's operation, selectively either establish a water path between the water inlet 201 and the receiving cavity 203, or directly establish communication between the water inlet 201 and the water outlet 202 or another water outlet 202', thereby allowing a user to choose whether to filter water from the water inlet 201. The switching valve assembly 240 includes an operating member 241 and a water path switching member 242 in communication with the operating member 241. The operating member 242 is configured for a user to operate, and the water path switching member 242 is configured to move under driving of the operating member 242 to achieve water path switching. The operating member 242 may be a knob or a key having an inclined pressing surface, but is not limited to the above. The switching valve assembly 240 is arranged at a fifth side 2205 adjacent to both the first side 2201 and the second side 2202. The fifth side 2205 is arranged opposite to the third side 2203. In the present embodiment, the filter housing 220 includes a main body portion 220a and a water inlet portion 220b, the main body portion 220a is detachably connected to the water inlet portion 220b, and the water inlet 201 is defined in the water inlet portion. The main body portion 220a is provided with the receiving cavity 203 and the water outlet 202. It can be understood that the detachable connection between the main body portion 220a and the water inlet portion 220b can reduce the difficulty of molding the filter housing 220, and the detachable connection can also facilitate replacement of components.

As shown in FIG.1 - FIG. 2, in the present embodiment, the water purifier 100 includes two water outlets. One water outlet 202 is directly in communication with the receiving cavity 203, and the other water outlet 202' is in communication with the water inlet 201 via the switching valve assembly. The detachment direction of the filter housing cover 290 or the detachment direction of the filter cartridge 210 faces the first side 2201.

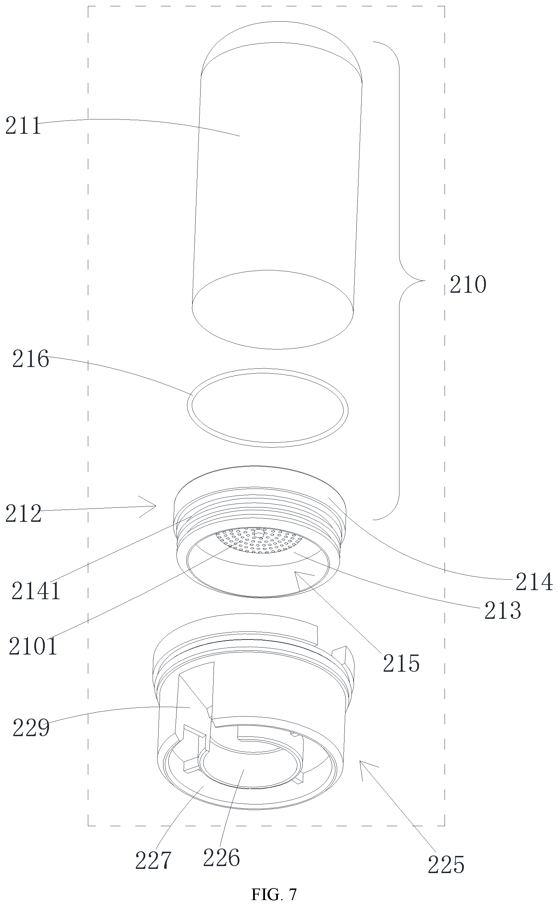

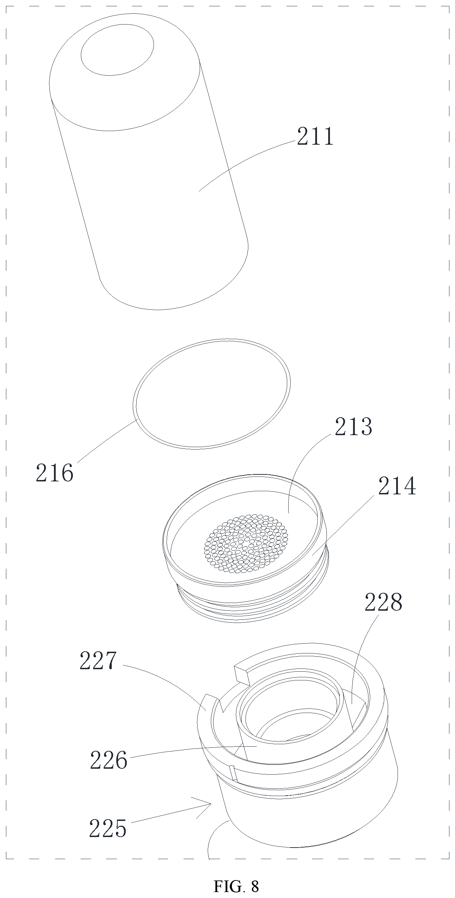

Further, referring to FIG. 7 and FIG. 8, the filter cartridge 210 includes a filter cartridge body 211 and a filter cartridge mounting cover 212 connected to one side of the filter cartridge body 211. The filter cartridge mounting cover 212 is provided with the filter cartridge water outlet 2101. At least an outer side surface of the filter cartridge body 211 is configured to form a water flow channel between the filter cartridge body 211 and a cavity wall of the receiving cavity 203. The water flow channel is configured for receiving water from the water inlet 201, and water filtered by the filter cartridge body 211 flows out of the receiving cavity 203 through the filter cartridge water outlet 2101. The filter cartridge mounting cover 212 includes a supporting member 213 and a side wall structure 214 annularly arranged around an outer periphery of the supporting member 213. The side wall structure 214 and the supporting member 213 together define a mounting groove 215. The mounting groove 215 is configured for receiving at least one portion of the inner annular wall 226. An inner side surface of the mounting groove 215 is configured to abut against and be fixed to the inner annular wall 226, or an outer side surface of the side wall structure 214 is configured to abut against and be fixed to an inner side of the outer annular wall 227, so that the filter cartridge 210 is detachably connected to the power generation chamber 225. The side wall structure 214 is further provided with at least one sealing ring 216. The at least one sealing ring 216 is configured to provide a sealing connection between the outer side surface of the side wall structure 214 and the inner side of the outer annular wall 227. The side wall structure 214 is provided with a sealing ring receiving groove 2141, and the at least one sealing ring 214 is arranged in the sealing ring receiving groove 2141. It can be understood that the design of the above-mentioned filter cartridge mounting cover 212 achieves technical effects such as a simple structure of the filter cartridge 210, stable installation, and convenient disassembly and assembly. The sealing ring 216 can not only achieve water sealing but also improve installation stability.

The control unit 410 may be a control chip, such as an MCU (Microcontroller Unit). A data display system may run inside the control unit 410.

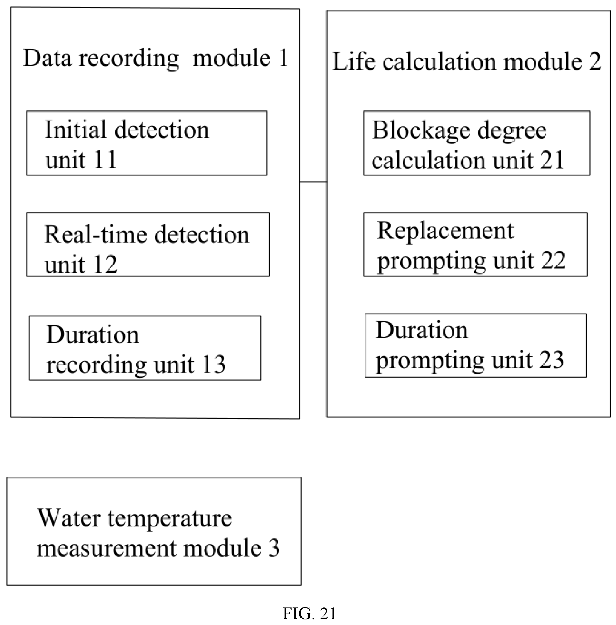

As shown in FIG. 21 - FIG. 24, the data display system may include a data recording module 1. The data recording module 1 is configured for detecting and recording initial electric energy generated by the generator, after a filter cartridge of the water purifier is replaced and when water flows through the water purifier. The data recording module 1 is further configured for detecting real-time electric energy generated by the generator during use of the water purifier after the filter cartridge replacement.

The data display system may further include a life calculation module 2. The life calculation module 2 is connected to the data recording module 1, and is configured for calculating a degree of blockage of the filter cartridge based on the real-time electric energy and the initial electric energy. The degree of blockage of the filter cartridge is displayed by the digital display assembly. In addition, the life calculation module 2 is further configured for reminding the user to replace the filter cartridge, when the life calculation module determines that the filter cartridge has reached its service life according to the degree of blockage.

Specifically, many existing water purifiers only have a water purification function but lack a digital display function, so that users can not accurately know the current usage status of the filter cartridge in the water purifier. Moreover, even some existing water purifiers equipped with a digital display function can only display ordinary data, such as current room temperature, current water temperature, and current water flow rate, and cannot reflect the usage status of the filter cartridge. As a result, users can not clearly know when the filter cartridge should be replaced, and often continue to use a filter cartridge that has exceeded its service life, which not only fails to provide a purification effect but may also breed bacteria due to long-term non-replacement, thereby affecting the water quality.

Therefore, in the present embodiment, a data display system for a water purifier is provided. The data display system can be used in conjunction with a power detection circuit mounted in the water purifier. Moreover, the electric energy used by the data display system is generated by a generator in the water purifier, which is environmentally friendly.

After a filter cartridge of the water purifier is replaced and when water flows through the water purifier, the data display system is configured for detecting initial electric energy generated by the generator. During use of the water purifier after the filter cartridge replacement, the data display system is configured for detecting real-time electric energy generated by the generator. By calculating the electric energy generated by the generator during the first use after filter cartridge replacement and during subsequent use, the data display system can reflect a change in water flow rate, and thereby reflect a degree of blockage of the filter cartridge, so as to prompt the user about the current service life of the filter cartridge. When it is determined, according to the degree of blockage, that the filter cartridge has reached its service life, the data display system can prompt the user to replace the filter cartridge in a timely manner.

In a preferred embodiment of the present invention, a power detection circuit is provided in the water purifier and is connected to the generator.

As shown in FIG. 21, the data recording module 1 includes an initial detection unit 11. After a filter cartridge of the water purifier is replaced and when a stable water flow first flows through the water purifier, the initial detection unit 11 is configured for detecting, via the power detection circuit, electric energy generated by the generator within one unit of time. In addition, the detected electrical power serves as initial electric energy.

The data recording module 1 further includes a real-time detection unit 12. During use of the water purifier after filter cartridge replacement, when water flows through the water purifier, the real-time detection unit 12 is configured for detecting, via the power detection circuit, electric energy generated by the generator within one unit of time. In addition, the detected electrical power serves as real-time initial electric energy.

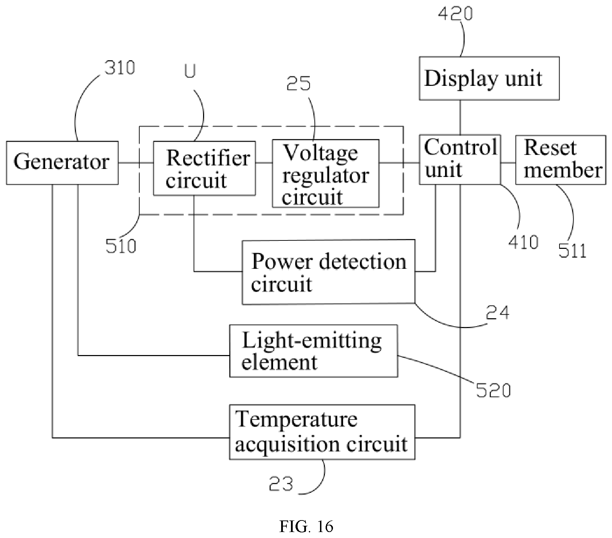

Specifically, as shown in FIG. 16 - FIG. 18, in the present embodiment, the power detection circuit is provided.

The power detection circuit includes a first resistor R1. A first end of the first resistor R1 is connected to a chip, and a second end of the first resistor R1 is connected to a power supply terminal of the generator.

The power detection circuit further includes a first field-effect transistor MOS1. A collector of the first field-effect transistor MOS1 is connected to the second end of the first resistor R1, and an emitter of the first field-effect transistor MOS1 is connected to a first end of a second resistor R2 and to ground. A base of the first field-effect transistor MOS1 is connected to a second end of the second resistor R2 and to a first end of a third resistor R3. A second end of the third resistor R3 is connected to a detection terminal of the generator.

In a preferred embodiment of the present invention, the life calculation module 2 includes a blockage degree calculation unit 21. During use of the water purifier after the filter cartridge is replaced, the blockage degree calculation unit 21 is configured for, when real-time electric energy is detected, calculating a ratio of the real-time electric energy to the initial electric energy, and using a difference between one and the ratio as the degree of blockage.

The life calculation module 2 further includes a replacement prompting unit 22 connected to the blockage degree calculation unit 21. The replacement prompting unit 22 is configured for prompting the user that the filter cartridge has reached its service life and needs to be replaced, when the degree of blockage is greater than a preset degree-of-blockage threshold.

Specifically, in the present embodiment, based on existing techniques in the electrical field, it can be known that electric energy can be calculated according to the following formula: W = U·I·t.

When a stable water flow passes through the water purifier, the internal generator is driven by the water flow to generate electricity, converting water energy into electric energy. At this time, the power detection circuit detects the voltage and current of the generator to obtain the power of the generator, and uses a preset time period (e.g., set to 1 second, 2 seconds, etc.) as one unit of time to calculate the electric energy generated within this unit of time.

When the filter cartridge is used for the first time after just being replaced, the electric energy generated by the generator within one unit of time is calculated, and this electric energy serves as initial electric energy. During subsequent use, the electric energy generated by the generator within one unit of time is calculated as real-time electric energy. During use, the filter cartridge becomes clogged, and the generated real-time electric energy will be lower than the initial electric energy. Therefore, the ratio of the real-time electric energy to the initial electric energy can reflect the current degree of blockage. The difference between one and the ratio is used as the degree of blockage. Since the water flow rate cannot be guaranteed to be the same each time, the degree of blockage is represented as a multiple of ten according to a ten-level attenuation method. When the generated real-time electric energy falls below 10% of the initial electric energy (which means that the degree of blockage has reached 90%), the user is prompted to replace the filter cartridge.

The ten-level attenuation method is a method for controller parameter tuning. Its basic concept is to determine the proportional band and attenuation period of the controller by causing the system to produce attenuated oscillations, and then to calculate the parameter values of the controller according to corresponding formulas.

The specific steps of the ten-level attenuation method are as follows.

In a closed-loop control system, first set the controller to pure proportional action, and preset the proportional band to a relatively large value.

After stability is achieved, a step disturbance is introduced by changing the set value, and the attenuation ratio of the recorded curve of the controlled variable is observed. Then gradually decrease the proportional band from a large value until an attenuation ratio of 10:1 appears. At this point, the proportional band ∂ s (referred to as the 10:1 attenuation proportional band) is recorded, and the attenuation period Ts is obtained from the curve.

Then, the parameter tuning values of the controller are calculated according to the formulas.

In a preferred embodiment of the present invention, as shown in FIG. 16 - FIG.18, a temperature acquisition circuit is further provided in the water purifier.

The data display system further includes a water temperature measurement module 3. The water temperature measurement module 3 is configured for acquiring, via the temperature acquisition circuit 23, real-time water temperature of the water flow passing through the water purifier, and for performing differential smoothing processing on the real-time water temperature. Further, the real-time water temperature is displayed by the digital display assembly.

As shown in FIG. 16 - FIG.18, the temperature acquisition circuit 23 includes a first capacitor C1. A first end of the first capacitor C1 is connected to a chip and to the first end of the third resistor R3. A second end of the first capacitor C1 is connected to the first end of the third resistor R3 and to ground. A second end of a fourth resistor R4 is connected to the second end of the third resistor R3.

Specifically, in the present embodiment, the present system is also provided with a temperature acquisition circuit 23 to detect water temperature of the water flow passing through the water purifier.

In addition, although parameters such as water flow rate and water pressure are not mentioned in the present embodiment, in practical situations, the parameters detected by hardware in the water purifier, such as various detection circuits and various sensors, are displayed by the digital display assembly, so as to reflect other parameters related to the water flow for the user to view.

In a preferred embodiment of the present invention, a timing circuit is further provided in the water purifier and is connected to the generator 310.

As shown in FIG. 21, the data recording module 1 further includes a duration recording unit 13. The duration recording unit 13 is configured for, starting from replacement of a filter cartridge of the water purifier, recording a total sum of the duration during which the generator generates electric energy as a usage duration, and the usage duration is displayed by the digital display assembly. Further, the duration recording unit 13 is further configured for resetting the usage duration upon the next filter cartridge replacement.

In a preferred embodiment of the present invention, as shown in FIG. 21, the life calculation module 2 further includes a duration prompting unit 23.

The duration prompting unit 23 is configured for prompting the user that the filter cartridge has reached its service life and needs to be replaced, when the usage duration exceeds a preset usage duration threshold of the filter cartridge.

Specifically, in the present embodiment, the service life of the filter cartridge not only can be reflected by the degree of blockage, but also can be determined by the usage duration of the filter cartridge. For example, based on an average household usage of 2 hours per day, the service life of the filter cartridge is calculated as 180 hours over 3 months by using a fuzzy algorithm principle. When the usage duration reaches 180 hours, the filter cartridge reaches the end of its service life and needs to be replaced. Therefore, when the generator is detected to be generating electricity, it indicates that water is flowing through the filter cartridge. By recording the duration of generator operation, the total duration from filter cartridge replacement to the current moment can be obtained. When the usage duration reaches 180 hours, the filter cartridge reaches the end of its service life, and the user is prompted that the filter cartridge needs to be replaced. If either the degree of blockage or the usage duration satisfies its respective condition, it indicates that the filter cartridge needs to be replaced.

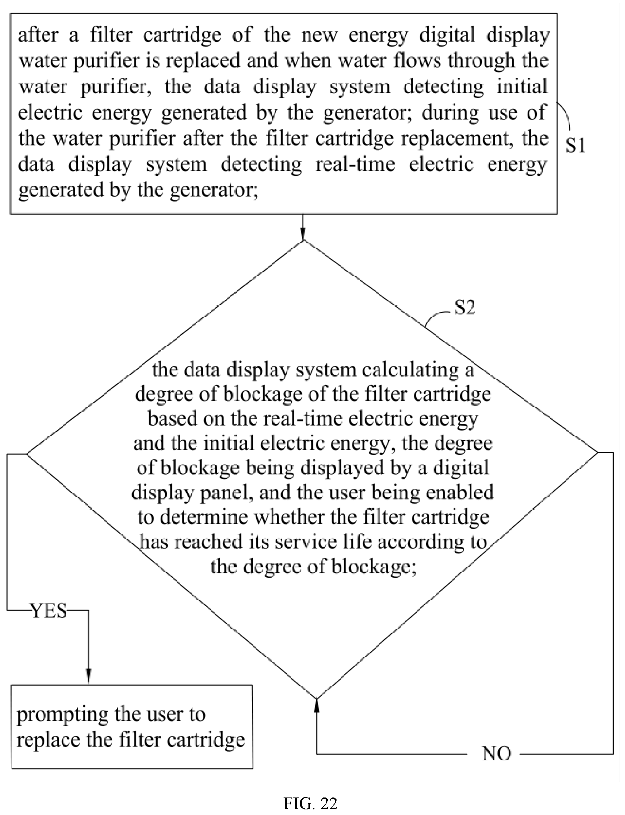

The present invention also provides a data display method for a water purifier, applied to the above-described data display system. As shown in FIG. 22, the data display method includes the following steps.
Step S1: after a filter cartridge of the water purifier is replaced and when water flows through the water purifier, the data display system detecting initial electric energy generated by a generator; during use of the water purifier after the filter cartridge replacement, the data display system detecting real-time electric energy generated by the generator;
Step S2: the data display system calculating a degree of blockage of the filter cartridge based on the real-time electric energy and the initial electric energy, the degree of blockage being displayed by a digital display assembly, and the user being enabled to determine whether the filter cartridge has reached its service life according to the degree of blockage;
if yes, prompt the user to replace the filter cartridge;
if no, return to Step S2.

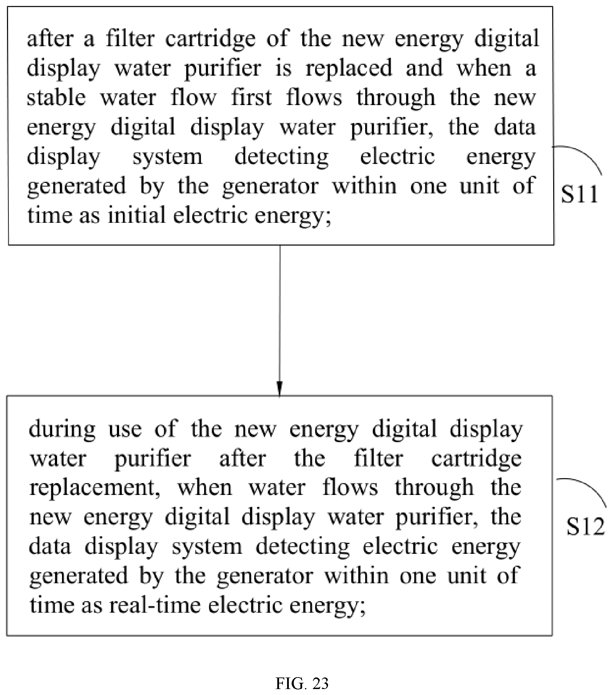

In a preferred embodiment of the present invention, as shown in FIG. 23, Step S1 includes the following steps.
Step S11: after a filter cartridge of the water purifier is replaced and when a stable water flow first flows through the water purifier, the data display system being configured for detecting, via the power detection circuit, electric energy generated by the generator within one unit of time as initial electric energy;
Step S12: during use of the water purifier after the filter cartridge replacement, when water flows through the water purifier, the data display system being configured for detecting, via the power detection circuit, electric energy generated by the generator within one unit of time as real-time initial electric energy.

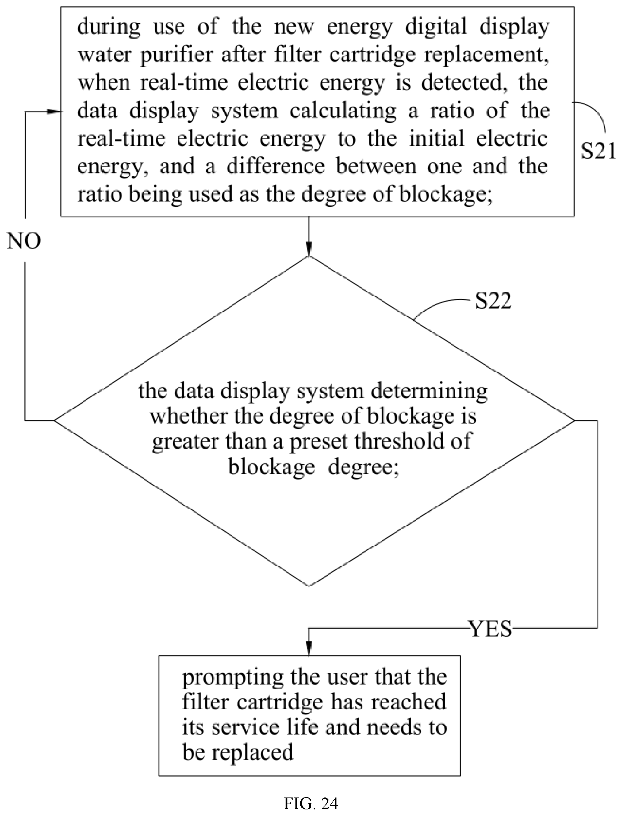

In a preferred embodiment of the present invention, as shown in FIG. 24, Step S2 includes the following steps.
Step S21: during use of the water purifier after the filter cartridge is replaced, when real-time electric energy is detected, the data display system calculating a ratio of the real-time electric energy to the initial electric energy, and a difference between one and the ratio being used as the degree of blockage;
Step S22: the data display system determining whether the degree of blockage is greater than a preset degree-of-blockage threshold;
if yes, the user is prompted that the filter cartridge has reached its service life and needs to be replaced;
if no, return to Step S21.

In a preferred embodiment of the present invention, as shown in FIG. 16 - FIG. 18, a temperature acquisition circuit is further provided in the water purifier. The data display method further includes the following step.

Step A1: the data display system being configured for acquiring, via the temperature acquisition circuit, real-time water temperature of the water flow passing through the water purifier, the data display system further performing differential smoothing processing on the real-time water temperature, and the real-time water temperature being displayed by the digital display assembly.

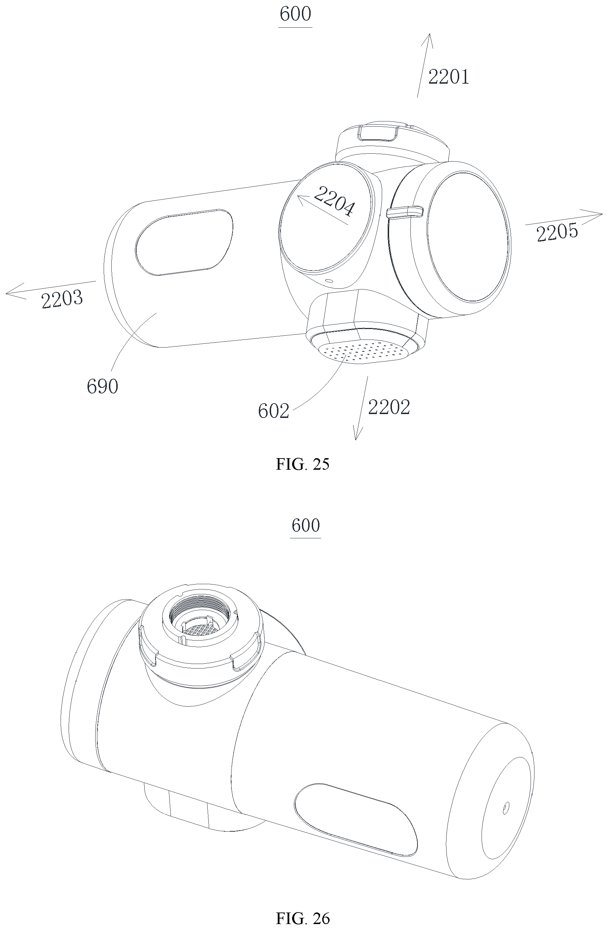

Referring to FIG. 25 - FIG. 27, the second embodiment of the present application provides a water purifier 600. The main difference between the water purifier 600 and the water purifier 100 of the first embodiment is that the water purifier 600 includes only one water outlet 602, and a detachment direction of a filter housing cover 690 or a detachment direction of a filter cartridge 610 is different from that of the first embodiment. It can be seen that the detachment direction of the filter housing cover 690 or the detachment direction of the filter cartridge 610 is oriented towards the third side 2203. In addition, the third side 2203 is different from the first side 2201, the second side 2202, the fourth side 2204, and the fifth side 2205.

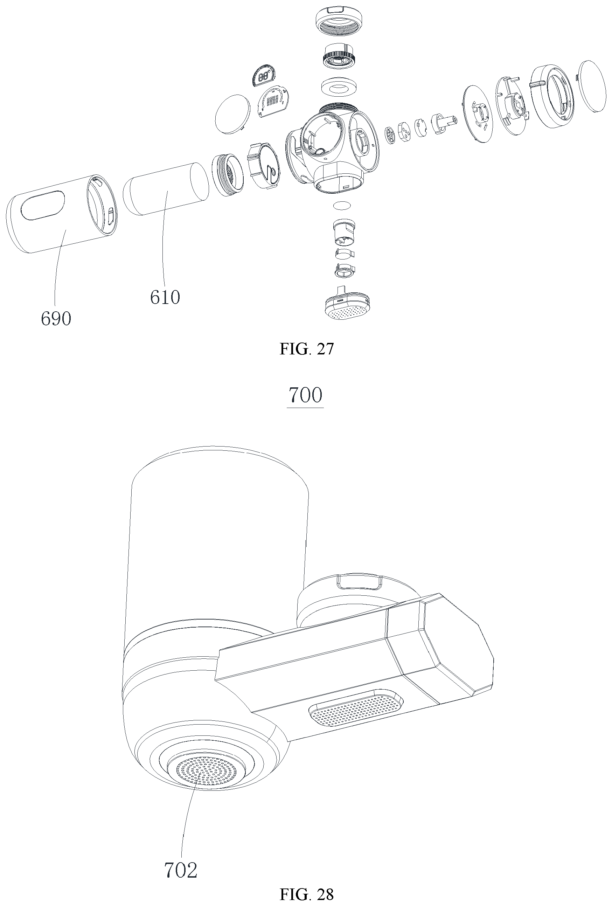

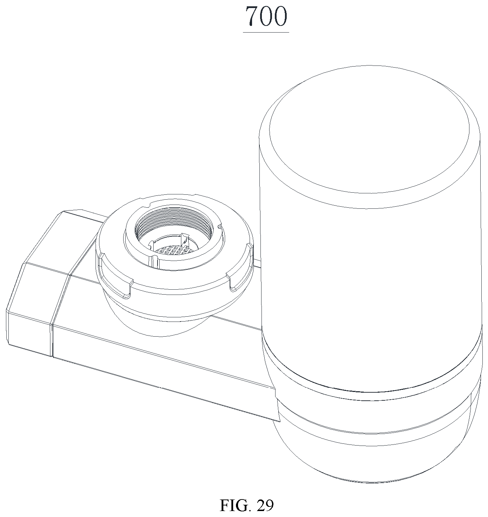

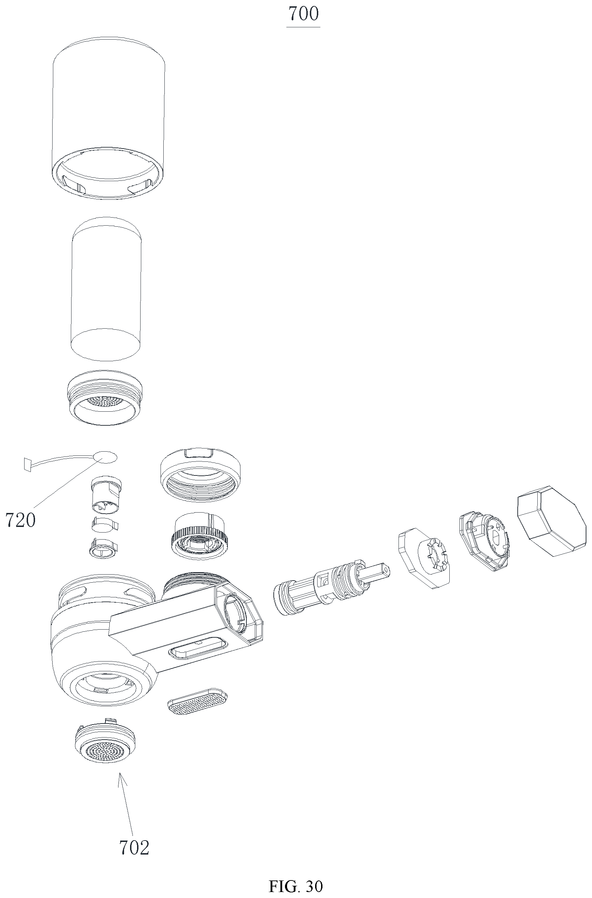

Referring to FIG. 28 - FIG. 30, the third embodiment of the present application provides a water purifier 700. The main difference between the water purifier 700 and the water purifier 100 of the first embodiment is that, the water purifier 100 does not have a digital display assembly 400, and a generator 710 and a light-emitting element 720 are arranged adjacent to the water outlet 702. The electric energy generated by the generator 710 (or alternatively, the voltage of a built-in battery) is used to supply power to the light-emitting element 720, so that the light-emitting element 720 is configured to emit light towards the water filtered by a filter cartridge 710, thereby providing a decorative effect or disinfecting the water filtered by the filter cartridge 710. It can be understood that arranging the light-emitting element 720 at the water outlet 702 can achieve a better decorative effect or a better sterilization and disinfection effect, so as to avoid the problem of poor sterilization and disinfection effects when pre-disinfection is performed but the filter cartridge becomes contaminated.

The above are only preferred embodiments of the present invention and are not intended to limit the implementation modes and scope of protection of the present invention. For those skilled in the art, it should be appreciated that any solution obtained by equivalent substitutions and obvious variations made using the contents of the present specification and drawings shall fall within the scope of protection of the present invention.

## Claims

1. A water purifier, **characterized in that**, the water purifier comprising:
a water purification assembly, a filter cartridge being arranged in the water purification assembly, the filter cartridge being arranged in a water channel, and the filter cartridge being configured for filtering raw water to provide filtered water;
a power generation assembly, the power generation assembly comprising a generator arranged in the water channel, and the generator being configured for generating electric energy by action of water in the water channel; and
a digital display assembly, comprising:
a control unit, the control unit being configured for acquiring initial electric energy of the generator and real-time electric energy of the generator, and for calculating clogging service life of the filter cartridge according to the initial electric energy and the real-time electric energy; and/or the control unit being configured for acquiring a sum of power generation duration of the generator, and for calculating time-based service life of the filter cartridge according to the sum of power generation duration;
wherein the initial electric energy is initial electric energy generated by the generator, and the initial electric energy is detected when water flows through the water purifier after the filter cartridge of the water purifier is replaced; the real-time electric energy is real-time electric energy generated by the generator, and the real-time electric energy is detected during use of the water purifier after the filter cartridge of the water purifier is replaced;
the digital display assembly further comprises a display unit, and the display unit is configured for displaying the clogging service life of the filter cartridge and/or time-based service life of the filter cartridge.

2. The water purifier according to claim 1, **characterized in that**, the digital display assembly is further configured for electrically connecting to the generator, so that the digital display assembly is configured to operate under driving of the electric energy; the water purifier further comprises a voltage conversion circuit, the voltage conversion circuit is electrically connected between the generator and the control unit, and the voltage conversion circuit is configured for receiving the electric energy and converting the electric energy into an operating voltage, and the control unit is configured for receiving the operating voltage to operate; the voltage conversion circuit comprises a rectifier circuit and a voltage regulator circuit, the rectifier circuit is electrically connected between the generator and the voltage regulator circuit, and the voltage regulator circuit is further electrically connected to the control unit.

3. The water purifier according to claim 2, **characterized in that**, the water purifier further comprises an power detection circuit, the power detection circuit is electrically connected between the voltage conversion circuit and the control unit, the power detection circuit is configured for receiving a voltage from the voltage conversion circuit, so as to detect and acquire the initial electric energy and the real-time electric energy, or to acquire the sum of the duration, and for providing the initial electric energy and the real-time electric energy or the sum of the duration to the control unit; the power detection circuit is electrically connected to the rectifier circuit to receive a rectified voltage output by the rectifier circuit, and the power detection circuit is configured to perform detection according to the rectified voltage.

4. The water purifier according to claim 3, **characterized in that**, the initial electric energy is at least one first signal detected by the power detection circuit, the first signal comprises at least one of a current generated by the generator, a real-time voltage, electric energy per unit time (i.e., electric quantity), a frequency of an alternating current, an electromotive force, or a rotational speed, the at least one first signal serves as the initial electric energy, and the initial electric energy is detected when water flows through the water purifier after the filter cartridge of the water purifier is replaced; the real-time electric energy is at least one second signal detected by the power detection circuit, the second signal comprises at least one of a current generated by the generator, a real-time voltage, electric energy per unit time (i.e., electric quantity), a frequency of an alternating current, an electromotive force, or a rotational speed, the at least one second signal serves as the real-time electric energy, and the real-time electric energy is detected when water flows through the water purifier during use of the water purifier after the filter cartridge of the water purifier is replaced.

5. The water purifier according to claim 1, **characterized in that**, the control unit is configured for calculating a ratio of the real-time electric energy to the initial electric energy, a difference between one and the ratio is used as the clogging service life, and the display unit is configured for displaying the clogging service life or the time-based service life in the form of an energy bar, a number from 0 to 100, or a percentage; the control unit is further configured for calculating the time-based service life according to the sum of the duration and a preset usage duration threshold of the filter cartridge; the control unit is configured for calculating the clogging service life or the time-based service life, and the control unit is further configured for controlling the display unit to display a lower value of the clogging service life and the time-based service life, and to simultaneously display or alternately display the clogging service life and the time-based service life.

6. The water purifier according to claim 1, **characterized in that**, the water purifier comprises a temperature acquisition circuit arranged in the water channel, the control unit is electrically connected to the temperature acquisition circuit, the temperature acquisition circuit is configured for acquiring a real-time water temperature of a water flow passing through the water purifier to obtain a water temperature detection signal, and for smoothing the water temperature detection signal and providing the smoothed signal to the control unit, and the control unit is configured for controlling the display unit to display the real-time water temperature according to the water temperature detection signal.

7. The water purifier according to claim 1, **characterized in that**, the control unit is configured for resetting, upon next replacement of the filter cartridge, the clogging service life and/or the time-based service life to initial values; the water purifier is provided with a reset member, the reset member is electrically connected to the control unit, the reset member is configured for a user to operate to generate a reset signal, and the control unit is configured for resetting, according to the reset signal, the clogging service life and/or the time-based service life to the initial values.

8. The water purifier according to claim 2, **characterized in that**, the water purifier further comprises a battery and a charging management circuit, the charging management circuit is electrically connected between the voltage conversion circuit and the battery, the charging management circuit is configured for receiving voltage from the voltage conversion circuit and for charging the battery, the battery is further electrically connected to the control unit, and the battery is configured for supplying power to the control unit when the generator cannot support the operation of the control unit.

9. The water purifier according to claim 1, **characterized in that**, the display unit comprises a plurality of LED lamps and a light-transmissive cover arranged around the plurality of LED lamps, and the control unit is configured for controlling turning on and off of the plurality of LED lamps, so that the plurality of LED lamps are capable of displaying, through the light-transmissive cover, the clogging service life of the filter cartridge or the time-based service life of the filter cartridge; the display unit further comprises a decorative cover, and the decorative cover is arranged on one side of the light-transmissive cover away from the plurality of LED lamps; the digital display assembly further comprises a main circuit board, the control unit and the plurality of LED lamps are arranged on the main circuit board, and the control unit is located on a surface of the main circuit board away from the plurality of LED lamps.

10. The water purifier according to claim 6, **characterized in that**, the water purifier further comprises at least one light-emitting element, the at least one light-emitting element is arranged at a position of the water channel adjacent to a water outlet, and the at least one light-emitting element is configured for emitting light towards water filtered by the filter cartridge, so as to create a decorative effect or to disinfect the water filtered by the filter cartridge; the at least one light-emitting element is configured for emitting visible light and/or ultraviolet light; the at least one light-emitting element is electrically connected to the generator and is configured to operate by receiving the electric energy; the power generation assembly further comprises a generator housing, and the at least one light-emitting element and the generator are encapsulated together by the generator housing; the generator comprises a power generation body and an impeller connected to the power generation body, and the impeller is configured to rotate under action of water in the water channel to cause the power generation body to generate the electric energy; the power generation assembly further comprises an impeller cover, the impeller cover is arranged at one side of the impeller away from the power generation body, the impeller cover is detachably connected to the generator housing, and an outer side wall of the impeller cover is provided with a plurality of impeller water inlets and a plurality of water guiding vanes arranged adjacent to the impeller water inlets; the temperature acquisition circuit comprises a sensing element; the sensing element, the at least one light-emitting element, and the generator are all encapsulated together by the generator housing, the sensing element and the at least one light-emitting element are arranged on a circuit board, and the circuit board is located at one side of the power generation body away from the impeller.

11. The water purifier according to claim 10, **characterized in that**, the water purification assembly further comprises a filter housing and a filter housing cover, the filter housing and the filter housing cover are detachably connected and together define a receiving cavity for receiving the filter cartridge, and the filter housing is provided with a water inlet and a water outlet each in communication with the receiving cavity; the water inlet, the receiving cavity, and the water outlet are all positioned in the water channel, so that raw water entering the receiving cavity through the water inlet can be filtered by the filter cartridge, and the filtered water can flow out through the water outlet; the filter housing is provided with a water outlet cover and a power generation assembly mounting structure, the water outlet cover is provided with the water outlet, the power generation assembly is mounted on the power generation assembly mounting structure, the water outlet cover and the power generation assembly mounting structure are integrally formed or separately assembled, and at least one portion of the water outlet cover is made of light-transmissive material.

12. The water purifier according to claim 11, **characterized in that**, the filter housing has an inner shell and an outer shell, the outer shell is at least partially arranged around the inner shell, the water outlet cover and the power generation assembly mounting structure are both arranged on the inner shell, the power generation assembly mounting structure is provided with an inner shell portion and a power generation chamber, the power generation chamber is arranged on the inner shell portion, and the power generation assembly is mounted in the power generation chamber; the power generation chamber comprises an inner annular wall, an outer annular wall, and a connecting wall connected between the inner annular wall and the outer annular wall, at least one of the inner annular wall and the outer annular wall is detachably connected to the filter cartridge, the power generation assembly is arranged in the inner annular wall and is arranged corresponding to a filter cartridge water outlet, the inner annular wall and the outer annular wall are further provided with a wiring notch, and an electrical connection wire of the power generation assembly extends out through the wiring notch, so as to be electrically connected to the digital display assembly; the inner shell is provided with the water inlet of the water channel, the water outlet of the water channel, a water inlet channel located between the water inlet and the receiving cavity, and a water outlet channel located between the receiving cavity and the water outlet; the power generation assembly mounting structure and the power generation assembly are arranged corresponding to the water outlet channel.

13. The water purifier according to claim 12, **characterized in that**, the water inlet faces a first side of the filter housing, the water outlet faces a second side of the filter housing, the first side and the second side are opposite sides, the water inlet and the water outlet are arranged opposite to each other or are arranged in a staggered manner, and a detachment direction of the filter housing cover or a detachment direction of the filter cartridge faces the first side or a third side adjacent to both the first side and the second side; the filter housing is further provided with a digital display assembly mounting cavity, the digital display assembly mounting cavity is in communication with the wiring notch through an opening in a cavity wall, and the digital display assembly is arranged in the digital display assembly mounting cavity; one end of the electrical connection wire away from the generator is provided with a first connector, the digital display assembly is provided with a second connector, the first connector and the second connector are engaged with each other, and a waterproof sealing adhesive surrounding an outer periphery of the electrical connection wire is provided at the opening of the cavity wall; the digital display assembly mounting cavity is located at a fourth side of the filter housing, and the fourth side is adjacent to both the first side and the second side.

14. The water purifier according to claim 13, **characterized in that**, the filter housing further has a switching valve assembly, the switching valve assembly is arranged corresponding to the water inlet, and the switching valve assembly is configured to, under a user's operation, selectively either establish a water path between the water inlet and the receiving cavity, or directly establish communication between the water inlet and the water outlet or another water outlet, thereby allowing a user to choose whether to filter water from the water inlet; the switching valve assembly comprises an operating member and a water path switching member in communication with the operating member, the operating member is configured for a user to operate, and the water path switching member is configured to move under driving of the operating member to achieve water path switching; the switching valve assembly is arranged at a fifth side adjacent to both the first side and the second side, and the fifth side is arranged opposite to the third side; the filter housing comprises a main body portion and a water inlet portion, the main body portion is detachably connected to the water inlet portion, the water inlet is defined in the water inlet portion, and the main body portion is provided with the receiving cavity and the water outlet.

15. The water purifier according to claim 12, **characterized in that**, the filter cartridge comprises a filter cartridge body and a filter cartridge mounting cover connected to one side of the filter cartridge body, the filter cartridge mounting cover is provided with the filter cartridge water outlet, at least an outer side surface of the filter cartridge body is configured to form a water flow channel between the filter cartridge body and a cavity wall of the receiving cavity, the water flow channel is configured for receiving water from the water inlet, and water filtered by the filter cartridge body flows out of the receiving cavity through the filter cartridge water outlet; the filter cartridge mounting cover comprises a supporting member and a side wall structure annularly arranged around an outer periphery of the supporting member, the side wall structure and the supporting member together define a mounting groove, the mounting groove is configured for receiving at least one portion of the inner annular wall, an inner side surface of the mounting groove is configured to abut against and be fixed to the inner annular wall, or an outer side surface of the side wall structure is configured to abut against and be fixed to an inner side of the outer annular wall, so that the filter cartridge is detachably connected to the power generation chamber; the side wall structure is further provided with at least one sealing ring, the at least one sealing ring is configured to provide a sealing connection between the outer side surface of the side wall structure and the inner side of the outer annular wall; the side wall structure is provided with a sealing ring receiving groove, and the at least one sealing ring is arranged in the sealing ring receiving groove.
